# EUROPEAN PATENT APPLICATION

(11) **EP 4 434 635 A1**
(43) Date of publication of application: **25.09.2024**
(21) Application number: 22895353.5
(22) Date of filing: 25.10.2022
(51) Int. Cl.: B03B 5/36, G01N 1/04

(54) **REFINER AND CONTROL METHOD**

(30) Priority: 16.11.2021 JP 2021186210
(71) Applicant: Shimadzu Corporation, Nakagyo-ku, Kyoto-shi, Kyoto 604-8511 (JP)
(72) Inventor: IKEZAWA, Yoshio, Kyoto-shi, Kyoto 604-8511 (JP)
(74) Representative: Kilian Kilian & Partner mbB
(86) International application number: PCT/JP2022/039624
(87) International publication number: WO 2023/090069

(57) **Abstract**

A heavy solution is stored in a heavy solution reservoir (120). A sample is separated in a container (50) based on a specific gravity difference with the use of the heavy solution supplied from the heavy solution reservoir (120). A waste solution from the container (50) is discharged through a first pipe (14). The heavy solution from the first pipe (14) is sent through a second pipe (10) to the heavy solution reservoir (120). A filter unit (F1, F2) is provided in the second pipe (10) to remove a contaminant from the heavy solution discharged through the first pipe (14).

## Description

### TECHNICAL FIELD

The present invention relates to a purification apparatus and a control method.

### BACKGROUND ART

In order to collect a component to be collected, a mixed sample containing the component has conventionally been purified. NPL 1 discloses a purification instrument that collects microplastic contained in a mixed sample collected from the sea, by gravity separation of the mixed sample with the use of a heavy solution.

### CITATION LIST

### NON PATENT LITERATURE

NPL 1: Hannes K. Imhof et al., "A novel, highly efficient method for the separation and quantification of plastic particles in sediments of aquatic environments," LIMNOLOGY and OCEANOGRAPHY: METHODS, Volume 10, Issue 7, pp. 524-537, 17 July 2012, https://doi.org/10.4319/lom.2012.10.524

### SUMMARY OF INVENTION

### TECHNICAL PROBLEM

The present disclosure provides a purification apparatus capable of efficiently using a heavy solution for gravity separation.

### SOLUTION TO PROBLEM

A purification apparatus according to a first aspect of the present disclosure is a purification apparatus that purifies a sample. The purification apparatus includes a heavy solution reservoir, a container, a first pipe, a second pipe, and a filter unit. A heavy solution is stored in the heavy solution reservoir. The sample is separated in the container with the heavy solution supplied from the heavy solution reservoir, based on a specific gravity difference. A waste solution from the container is discharged through the first pipe. The heavy solution from the first pipe is sent to the heavy solution reservoir through the second pipe. The filter unit is provided in the second pipe to remove a contaminant from the heavy solution discharged through the first pipe.

A purification apparatus according to a second aspect of the present disclosure is a purification apparatus including a container, a first pipe, a mesh member, a sensor, a stirring portion, and a computer. A sample is separated in the container with a heavy solution based on a specific gravity difference. A waste solution from the container is discharged through the first pipe. The mesh member is provided between the container and the first pipe. The sensor detects discharge of the waste solution from the container to the first pipe. The stirring portion stirs the sample in the container. The computer is configured to compare an amount of discharge of the waste solution detected by the sensor with a threshold value, and cause the stirring portion to perform stirring in the container when the computer determines that the amount of discharge is smaller than the threshold value.

A control method according to a third aspect of the present disclosure is a control method performed by a computer included in a purification apparatus that purifies a sample in a container supplied with a heavy solution in a heavy solution reservoir. The control method includes discharging a waste solution from the container, introducing the heavy solution discharged from the container to a filter unit to remove a contaminant from the heavy solution, and sending the heavy solution that has passed through the filter unit back to the heavy solution reservoir.

A control method according to a fourth aspect of the present disclosure is a control method performed by a computer in a purification apparatus. The purification apparatus includes a container, a fist pipe, a mesh member, a sensor, a stirring portion, and a computer. A sample is separated in the container with a heavy solution based on a specific gravity difference. A waste solution from the container is discharged through the first pipe. The mesh member is provided between the container and the first pipe. The sensor detects discharge of the waste solution from the container to the first pipe. The stirring portion stirs the sample in the container. The control method includes discharging the waste solution from the container to the first pipe through the mesh member after purification of the sample, detecting, by the sensor, an amount of discharge of the waste solution from the container to the first pipe, and comparing the amount of discharge of the waste solution detected by the sensor with a threshold value, and when the amount of discharge is determined as being smaller than the threshold value, perform stirring in the container.

### ADVANTAGEOUS EFFECTS OF INVENTION

According to the purification apparatus according to the present disclosure, the heavy solution from which a component to be separated has been removed in the container is discharged through the first pipe, a contaminant is removed therefrom by the filter unit provided in the second pipe, and the resultant heavy solution is stored in the heavy solution reservoir. Therefore, the heavy solution for gravity separation can efficiently be used.

### BRIEF DESCRIPTION OF DRAWINGS

Fig. 1 is a schematic diagram showing a configuration of a purification apparatus 1 according to a first embodiment.
Fig. 2 is a diagram showing an exemplary hardware configuration of a computer.
Fig. 3 is a flowchart showing processing relating to filtering of a heavy solution.
Fig. 4 is a schematic diagram showing a configuration of a purification apparatus 1A according to a first modification.
Fig. 5 is a flowchart showing processing relating to detection and mitigation of clogging of a discharge mesh of the purification apparatus according to a second embodiment.
Fig. 6 is a schematic diagram showing a configuration of a purification apparatus 1B according to a second modification.
Fig. 7 is a schematic diagram showing a configuration of a purification apparatus 1C according to a third embodiment.

### DESCRIPTION OF EMBODIMENTS

The present embodiment will be described in detail with reference to the drawings. The same or corresponding elements in the drawings have the same reference characters allotted and description thereof will not be repeated in principle.

### [First Embodiment]

### [1. Configuration of Purification Apparatus]

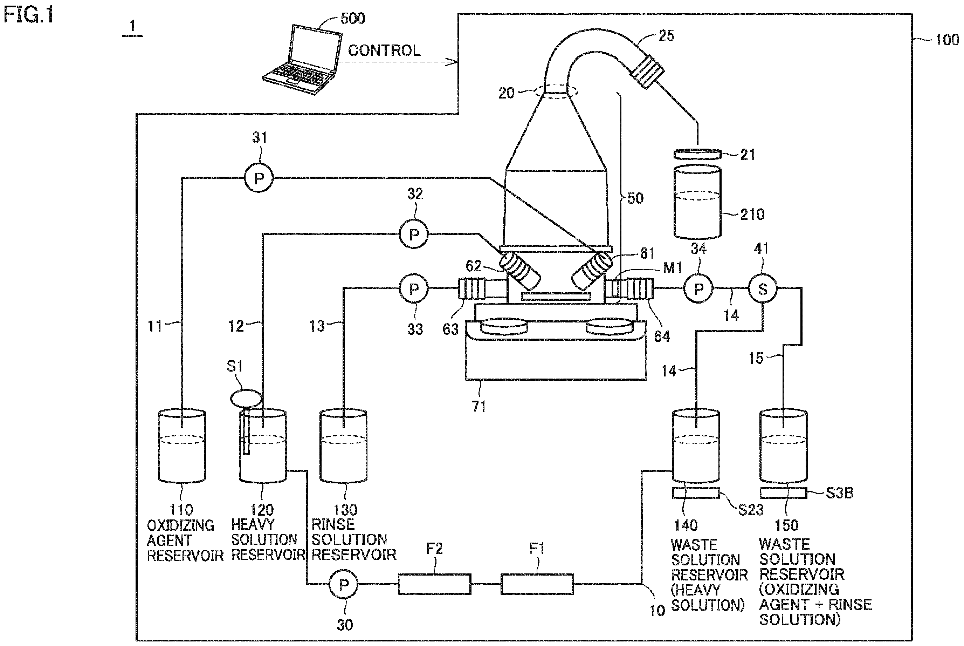

Fig. 1 is a diagram schematically showing a purification apparatus 1 according to the present embodiment. Purification apparatus 1 according to the present embodiment performs processing for collecting, by purifying a mixed sample, a component to be collected that is contained in the mixed sample. "Purification" encompasses purification of a mixture to a pure substance, and in the present embodiment, purification encompasses obtaining a pure substance (component) to be collected from a collected mixed sample.

Any mixed sample may be applicable so long as a "mixed sample" to be purified by purification apparatus 1 contains a component to be collected, and exemplary "mixed samples" include seawater and sand collected from the sea or the seashore and processed products such as food and cosmetics. In the present embodiment, seawater and sand collected from the sea or the seashore represent an exemplary "mixed sample." The "mixed sample" is also simply referred to as a "sample" below.

Any component may be applicable so long as the "component" to be collected by purification apparatus 1 is collected by purification apparatus 1 according to the present embodiment, and exemplary "components" include microplastic. Microplastic refers, for example, to fine plastic particles each having a length approximately from 0.1 to 5 mm. In the present embodiment, microplastic contained in seawater and sand collected from the sea or the seashore represents an exemplary "component".

Referring to Fig. 1, purification apparatus 1 includes a purification instrument 100 that purifies a sample and a computer 500 that controls purification instrument 100.

Purification instrument 100 includes a container 50, a plurality of pipes 10 to 15, a plurality of pumps 30 to 34, a plurality of ports 61 to 64, a switching valve 41, a constant-temperature stirrer 71, a discharge pipe 25, a detection mesh 21, an oxidizing agent reservoir 110, a heavy solution reservoir 120, a rinse solution reservoir 130, waste solution reservoirs 140 and 150, a supernatant reservoir 210, a heavy solution sensor S1, fluid volume sensors S23 and S3B, filters F1 and F2, and a discharge mesh M1.

An oxidizing agent for treatment of a contaminant is stored in oxidizing agent reservoir 110. The "contaminant" refers to a foreign matter in the mixed sample, other than a component to be collected. In the present embodiment, an exemplary "contaminant" includes an organic contaminant having a property of an organic substance. Any oxidizing agent may be applicable so long as the contaminant is treated with the "oxidizing agent." In the present embodiment, the "oxidizing agent" decomposes an organic contaminant. An exemplary "oxidizing agent" includes oxygenated water (H₂O₂) and a mixture of oxygenated water (H₂O₂) and iron (II) oxide (FeO). When seawater and sand are adopted as the "mixed sample," exemplary "organic contaminants" include a scrap piece of wood mixed in seawater or sand and planktons.

Pipe 11 is connected to oxidizing agent reservoir 110 and port 61 provided in an outer circumferential portion of container 50. An oxidizing agent stored in oxidizing agent reservoir 110 is introduced through pipe 11 into container 50 as pump 31 arranged in pipe 11 is driven. Pump 31 is controlled by computer 500.

In the inside of port 61, a mesh (not shown) is provided not to allow discharge of a component contained in the sample to the outside. The mesh has a mesh size small enough to trap microplastic to be collected. A specific example of the mesh includes a wire gauze made of SUS (made of stainless steel) or a membrane filter made of PTFE (made of Teflon^{™}). When the mesh made of PTFE is employed, desirably, PTFE does not leak as plastic. The mesh size of the mesh is, for example, approximately 0.1 mm. (When microplastic is to be collected, the mesh should have a mesh size that does not allow passage of particles from 0.1 to 5 mm.) Ports 62 and 63 are also similarly configured and description thereof will not be repeated.

A rinse solution for cleaning of the inside of container 50 is stored in rinse solution reservoir 130. Any rinse solution may be applicable so long as the inside of container 50 is cleaned with the "rinse solution," and an exemplary "rinse solution" includes water. In the present embodiment, the "rinse solution" introduced through pipe 13 plays a role to clean the inside of container 50 and a role to dilute the oxidizing agent introduced into container 50.

Pipe 13 is connected to rinse solution reservoir 130 and port 63 provided in the outer circumferential portion of container 50. The rinse solution stored in rinse solution reservoir 130 is introduced into container 50 through pipe 13 as pump 33 arranged in pipe 13 is driven. Pump 33 is controlled by computer 500.

A heavy solution for separation of a sample based on a specific gravity difference is stored in heavy solution reservoir 120. Any heavy solution may be applicable so long as the "heavy solution" separates the sample based on the specific gravity difference. In the present embodiment, the "heavy solution" allows an inorganic contaminant having a property of an inorganic substance to settle based on the specific gravity difference. Exemplary "heavy solutions" include sodium chloride (NaCl), sodium iodide (NaI), and zinc chloride (ZnC12). When seawater and sand are adopted as the "mixed sample," exemplary "inorganic contaminants" include sand, glass, and stone. A specific gravity of the "heavy solution" is set to be greater than a specific gravity of the "component" to be collected by purification apparatus 1 and to be smaller than a specific gravity of the "inorganic contaminant." For example, when microplastic is adopted as the "component" to be collected by purification apparatus 1 and sand, glass, stone, and the like are adopted as the "inorganic contaminant," the "heavy solution" should only be greater in specific gravity than microplastic and should only be smaller in specific gravity than sand, glass, stone, and the like. Specifically, the specific gravity of the "heavy solution" should only be set approximately to 1.5 to 1.7.

Pipe 12 is connected to heavy solution reservoir 120 and port 62 provided in the outer circumferential portion of container 50. The heavy solution stored in heavy solution reservoir 120 is introduced into container 50 through pipe 12 as pump 32 arranged in pipe 12 is driven. Pump 32 is controlled by computer 500.

A contaminant is treated in container 50 with an oxidizing agent supplied from oxidizing agent reservoir 110. The inside of container 50 is cleaned with the rinse solution supplied from rinse solution reservoir 130. A mixed sample is separated in container 50 with the use of the heavy solution supplied from heavy solution reservoir 120 based on a specific gravity difference.

Container 50 is carried on constant-temperature stirrer 71. Constant-temperature stirrer 71 includes a stirring bar and a heater that are not shown. Constant-temperature stirrer 71 stirs a sample accommodated in container 50 by rotation of the stirring bar under the control by computer 500. Constant-temperature stirrer 71 corresponds to one example of the "stirring portion."

Discharge pipe 25 is connected to a discharge port 20 provided at an uppermost portion of container 50, and through discharge pipe 25, a supernatant of the sample that overflows container 50 is discharged to the outside. Detection mesh 21 collects, by filtering the supernatant of the sample discharged through discharge pipe 25, a component to be collected that is contained in the supernatant. The supernatant that has passed through detection mesh 21 is collected in supernatant reservoir 210. In a preferred embodiment, detection mesh 21 is a mesh of a size small enough to trap microplastic to be collected. A specific example of the mesh includes a wire gauze made of SUS (made of stainless steel) or a membrane filter made of PTFE (made of Teflon^{™}). The mesh size of detection mesh 21 is, for example, approximately 0.1 mm.

Port 64 is a discharge port provided in the outer circumferential portion of container 50, for discharge of a solution in container 50. In the inside of port 64, discharge mesh M1 is provided not to allow discharge from container 50, of a component contained in the sample. Discharge mesh M1 corresponds to one embodiment of the "mesh member." Discharge mesh M1 should only be located between pipe 14 and container 50. Preferably, discharge mesh M1 is a mesh having a mesh size small enough to trap microplastic to be collected. A specific example of the mesh includes a wire gauze made of SUS (made of stainless steel) or a membrane filter made of PTFE (made of Teflon^{™}). The mesh size of discharge mesh M1 is, for example, approximately 0.1 mm.

Pipe 14 is connected to port 64. The heavy solution discharged as a waste solution from container 50 is discharged from port 64 provided in container 50 through pipe 14 to waste solution reservoir 140. Pipe 14 corresponds to one example of the "first pipe" in the present disclosure.

Pump 34 is provided in pipe 14 and operates under the control by computer 500 to suction the waste solution in container 50 to discharge the waste solution through port 64 toward waste solution reservoir 140 or waste solution reservoir 150.

Switching valve 41 is provided in pipe 14. More specifically, switching valve 41 is controlled by computer 500 to switch a path to be connected to container 50 to one of a path connected to waste solution reservoir 140 and a path connected to waste solution reservoir 150. In other words, switching valve 41 switches whether to introduce the waste solution discharged from container 50 into waste solution reservoir 140 or waste solution reservoir 150.

The heavy solution discharged as the waste solution from container 50 is stored in waste solution reservoir 140.

Pipe 15 is provided on one side of switching valve 41. The oxidizing agent and the rinse solution discharged as the waste solution from container 50 are discharged through pipe 15 to waste solution reservoir 150. In the example in Fig. 1, the waste solution containing sea water in the mixed sample discharged from container 50 is also discharged through pipe 15 to waste solution reservoir 150.

The oxidizing agent and the rinse solution discharged from container 50 as the waste solution and the waste solution containing sea water in the mixed sample are stored in waste solution reservoir 150.

The heavy solution from pipe 14 is sent through pipe 10 to heavy solution reservoir 120. Pipe 10 is provided with pump 30 and filters F1 and F2. Pipe 10 corresponds to one example of the "second pipe" in the present disclosure.

Pump 30 is controlled by computer 500 to deliver the heavy solution accommodated in waste solution reservoir 140 toward heavy solution reservoir 120.

A prime mover with which the heavy solution is sent from pipe 14 to heavy solution reservoir 120 is not necessarily limited to the pump, and for example, purification instrument 100 may be configured such that the heavy solution is sent by its self-weight. In this case, an on-off valve is required instead of the pump.

Filters F1 and F2 remove a contaminant from the heavy solution discharged through pipe 14. In the example in Fig. 1, filters F1 and F2 are filters that filter out the contaminant. Desirably, a filter smaller in pore diameter than the mesh provided in ports 61 to 64 is employed as filters F1 and F2. In pipe 10, filters F1 and F2 are provided in the descending order of the size of the pore diameter so as to allow passage of the heavy solution. Specifically, filter F2 is smaller in pore diameter than filter F1. For example, filter F1 has a pore diameter of approximately 0.05 mm and filter F2 has a pore diameter of approximately 0.01 mm. According to such a configuration, filter F1 removes a relatively larger contaminant (not smaller than approximately 0.05 mm) and thereafter filter F2 removes a relatively smaller contaminant (smaller than approximately 0.05 mm and not smaller than approximately 0.01 mm). Filters F1 and F2 correspond to one example of the "first filter" and one example of the "second filter," respectively.

A plurality of filters or a single filter may be provided in pipe 10 as illustrated above. An example where a plurality of filters are provided is more advantageous than an example where filter F1 having a large pore diameter is employed alone in that a relatively smaller contaminant is also removed. In addition, the example where a plurality of filters are provided is more advantageous than an example where filter F2 having a small pore diameter is employed alone in that clogging by the contaminant is less likely and a frequency of replacement of the filter is lower. A specific example of the filter is a membrane filter made of PTFE (made of Teflon^{™}).

Fluid volume sensor S23 is provided in the vicinity of waste solution reservoir 140 for detection of a fluid volume of the waste solution stored in waste solution reservoir 140. Fluid volume sensor S23 is, for example, a weight sensor that detects a weight of the waste solution stored in waste solution reservoir 140, and provided under waste solution reservoir 140. The weight sensor is, for example, a load cell.

A detection value from fluid volume sensor S23 is transmitted to computer 500. Computer 500 detects the fluid volume of the heavy solution stored in waste solution reservoir 140 based on the detection value from fluid volume sensor S23. When the fluid volume becomes equal to or smaller than a threshold value, computer 500 determines that filtering of the heavy solution has been completed and deactivates pump 30 to stop filtering. Fluid volume sensor S23 corresponds to one example of the "second sensor" in the present disclosure.

Fluid volume sensor S23 may be another sensor that measures the fluid volume of the waste solution stored in waste solution reservoir 140, and for example, a liquid level sensor using ultrasonic waves, laser, or the like may be applicable.

Since fluid volume sensor S23 should only be a sensor capable of detecting completion of filtering of the heavy solution in pipe 14, for example, a flow rate sensor provided in pipe 14 may be applicable. In this case, the flow rate sensor detects a flow rate of the heavy solution in pipe 14. According to such a configuration, when the flow rate becomes equal to or smaller than a threshold value, computer 500 can determine that filtering of the heavy solution has been completed and deactivate pump 30 to stop filtering.

Fluid volume sensor S3B is provided in the vicinity of waste solution reservoir 150 for detection of the fluid volume of the waste solution (including at least one of the oxidizing agent and the rinse solution) stored in waste solution reservoir 150. Fluid volume sensor S3B is, for example, a weight sensor that detects the weight of the waste solution stored in waste solution reservoir 150, and provided under waste solution reservoir 150. The weight sensor is, for example, a load cell. A detection value from fluid volume sensor S3B is transmitted to computer 500. Computer 500 detects the fluid volume of the waste solution stored in waste solution reservoir 150 based on the detection value from fluid volume sensor S3B.

Fluid volume sensor S3B may be another sensor that measures the fluid volume of the waste solution stored in waste solution reservoir 150, and for example, a liquid level sensor using ultrasonic waves, laser, or the like may be applicable.

Heavy solution sensor S1 is a sensor that detects whether or not the heavy solution that has passed through filters F1 and F2 maintains its quality that permits use thereof again for purification of the sample. Heavy solution sensor S1 detects at least one of a turbidity and a concentration of the heavy solution that has passed through filters F1 and F2. Heavy solution sensor S1 corresponds to one example of the "first sensor" in the present disclosure.

In the example in Fig. 1, heavy solution sensor S1 is a turbidity sensor provided in heavy solution reservoir 120. Heavy solution sensor S1 detects the turbidity of the heavy solution in heavy solution reservoir 120 and sends a detection value to computer 500. When heavy solution sensor S1 is a concentration sensor, heavy solution sensor S1 detects a concentration of the heavy solution in heavy solution reservoir 120 and sends a detection value to computer 500. According to such a configuration, computer 500 can determine whether or not the heavy solution stored in heavy solution reservoir 120 maintains its quality that permits use thereof again for purification of the sample, based on the detection value from heavy solution sensor S1.

Heavy solution sensor S1 may be provided in a part of pipe 10 between filter F2 and heavy solution reservoir 120 to detect the turbidity and the concentration of the collected heavy solution that has passed through filters F1 and F2.

Computer 500 may be implemented by a general-purpose computer or a dedicated computer for controlling purification instrument 100. Computer 500 receives detection values from fluid level sensors S23 and S3B and heavy solution sensor S1 and controls purification instrument 100 based on the detection values.

### [2. Hardware Configuration]

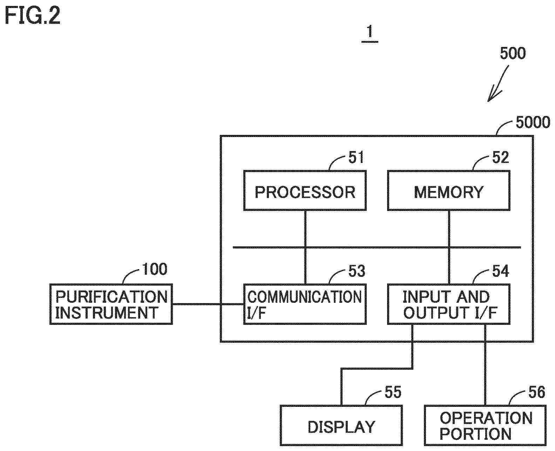

Fig. 2 is a diagram showing an exemplary hardware configuration of the computer. Computer 500 includes a controller 5000, a display 55, and an operation portion 56. Computer 500 controls operations of purification instrument 100. Computer 500 is configured to process a detection signal transmitted from purification instrument 100 and to show on display 55, a result or the like based on analysis thereof.

Display 55 and operation portion 56 are connected to controller 5000. Display 55 is implemented, for example, by a liquid crystal panel on which an image can be displayed. Operation portion 56 receives an operation input from a user onto purification instrument 100. Operation portion 56 is typically implemented by a touch panel, a keyboard, a mouse, and/or the like.

Controller 5000 includes, as its main constituent elements, a processor 51, a memory 52, a communication interface (I/F) 53, and an input and output I/F 54. These components are communicatively connected to one another through a bus.

Processor 51 is typically a computing processing unit such as a central processing unit (CPU) or a micro processing unit (MPU). Processor 51 controls operations of purification apparatus 1 by reading and executing a program stored in memory 52.

Memory 52 is implemented by a non-volatile memory such as a random access memory (RAM), a read only memory (ROM), and a flash memory. A program to be executed by processor 51, data to be used by processor 51, or the like is stored in memory 52.

Input and output I/F 54 is an interface for exchange of various types of data between processor 51, and display 55 and operation portion 56.

Communication I/F 53 is a communication interface for exchange of various types of data with purification instrument 100, and it is implemented by an adapter, a connector, or the like. Communication may be wireless communication by wireless local area network (LAN) or wired communication using a universal serial bus (USB).

### [4. Sample Purification Method]

A method of purifying a sample with purification apparatus 1 will now be described.

Initially, a user introduces a sample into container 50 of purification apparatus 1. For example, the user injects the sample into container 50 from a not-shown inlet. Thereafter, the user performs a start operation with the use of operation portion 56 of computer 500 to start control of purification instrument 100 by computer 500.

The sample accommodated in container 50 contains a waste solution such as sea water. When control by computer 500 is started, computer 500 controls pump 34 and switching valve 41 to discharge the waste solution in container 50 to waste solution reservoir 150 through port 64 and pipes 14 and 15. Microplastic to be collected that is contained in the sample is not allowed to be discharged to the outside by discharge mesh M1 included in port 64 but remains in container 50.

Computer 500 then deactivates pump 34 on a discharge side and controls pump 31 to introduce the oxidizing agent in oxidizing agent reservoir 110 into container 50 through pipe 11 and port 61.

Computer 500 then controls constant-temperature stirrer 71 to rotate a stirring bar provided in container 50 while certain heat is applied to container 50. The user sets a temperature of container 50 and a rotation speed and a rotation time period of the stirring bar in advance. As the sample is thus stirred, oxidation treatment with the oxidizing agent is performed to decompose an organic contaminant contained in the sample. Though heating is not necessarily required in stirring of the sample, decomposition in oxidation treatment tends to be accelerated by the temperature of the sample maintained constant by heating.

Computer 500 then controls pump 34 and switching valve 41 to discharge the waste solution in container 50 included in the sample resulting from decomposition of the organic contaminant, through port 64 and pipes 14 and 15 to waste solution reservoir 150. Microplastic or the like to be collected that is contained in the sample is not allowed to be discharged to the outside by discharge mesh M1 included in port 64 but remains in container 50.

Computer 500 then deactivates pump 34 on the discharge side and controls pump 33 to introduce the rinse solution in rinse solution reservoir 130 into container 50 through pipe 13 and port 63 to clean the inside of container 50. At this time, computer 500 controls an amount of suction by pump 33 to introduce the rinse solution in an amount set in advance by the user into container 50.

Computer 500 then controls pump 34 and switching valve 41 to discharge the waste solution in container 50 into which the rinse solution has been introduced, through port 64 and pipes 14 and 15 to waste solution reservoir 150. The rinse solution thus cleans the inside of container 50. Microplastic or the like to be collected that is contained in the sample, on the other hand, is not allowed to be discharged to the outside by discharge mesh M1 included in port 64 but remains in container 50.

Thereafter, computer 500 has the sample left as it is for a prescribed time period (for example, for one day) to dry the sample. Then, computer 500 controls pump 32 to introduce the heavy solution in heavy solution reservoir 120 into container 50 through pipe 12 and port 62. At this time, computer 500 controls the amount of suction by pump 32 to introduce the heavy solution in an amount set in advance by the user into container 50.

As the heavy solution is thus introduced to the sample, an inorganic contaminant contained in the sample settles around the bottom of container 50 owing to a specific gravity difference. The liquid level of the sample separated by specific gravity gradually rises in container 50 and the supernatant of the sample soon reaches discharge port 20 of container 50. Then, the supernatant of the sample is discharged to the outside through discharge port 20 and discharge pipe 25.

The supernatant of the sample discharged through discharge pipe 25 is filtered by detection mesh 21, and only the waste solution is collected in supernatant reservoir 210. Microplastic which is a component lighter in specific gravity than the heavy solution remains at detection mesh 21. Such gravity separation requires approximately one day, and hence computer 500 controls introduction of the heavy solution to the sample during that period.

After microplastic is collected by purification of the sample, container 50 is cleaned in post-treatment. Specifically, computer 500 controls pump 34 and switching valve 41 to discharge as the waste solution, the heavy solution in container 50 from which microplastic has been collected to waste solution reservoir 140 through port 64 and pipe 14. Computer 500 then causes the rinse solution accommodated in rinse solution reservoir 130 to be introduced into container 50 and causes the waste solution in container 50 into which the rinse solution has been introduced to be discharged to waste solution reservoir 150. The rinse solution thus cleans the inside of container 50.

### [5. Heavy Solution Filtering Method]

Conventionally, a purification instrument or the like has been used to separate a mixed sample based on specific gravity to collect a component to be collected. In such purification of a sample, the heavy solution that remains after collection of the component to be collected contains a contaminant different from the component to be collected. If the contaminant can be removed from such a heavy solution after purification, the heavy solution can be used again for purification of a sample, which is advantageous in that an amount of discarded heavy solution can be reduced.

In purification apparatus 1 according to the present embodiment, the sample is purified in container 50 with the heavy solution stored in heavy solution reservoir 120 to remove therefrom a component to be collected. Thereafter, the heavy solution is introduced into pipe 10 to pass through filters F1 and F2. The contaminant can thus be removed from the heavy solution after purification and the heavy solution can again be stored in heavy solution reservoir 120. In other words, the heavy solution after purification can be reused.

Specifically, when purification of the sample is completed, computer 500 has pump 30 driven to introduce the heavy solution in waste solution reservoir 140 into pipe 10 and to send the heavy solution back to heavy solution reservoir 120 through filters F1 and F2. The heavy solution used for purification of the sample is thus filtered. When the fluid volume in waste solution reservoir 140 detected by fluid volume sensor S23 becomes equal to or smaller than a prescribed threshold value, computer 500 determines that filtering of the heavy solution has been completed and deactivates pump 30.

After filtering of the heavy solution is completed, computer 500 determines whether or not the heavy solution maintains its quality that permits use thereof again for purification of the sample based on the detection value from heavy solution sensor S1. Specifically, when the detection value (the turbidity or the concentration) from heavy solution sensor S1 is equal to or smaller than a prescribed reference value, computer 500 determines that the heavy solution maintains its quality that permits use thereof again for purification of the sample. When the detection value from heavy solution sensor S1 is larger than the prescribed reference value, on the other hand, computer 500 determines that the heavy solution does not maintain its quality that permits use thereof again for purification of the sample. In this case, computer 500 gives a notification of an error to encourage the user to replace the heavy solution in heavy solution reservoir 120. The notification of the error is given, for example, by visual representation with the use of display 55 or a not-shown indicator or by voice and sound using a not-shown speaker or the like.

### [6. Flow of Processing Relating to Filtering of Heavy Solution]

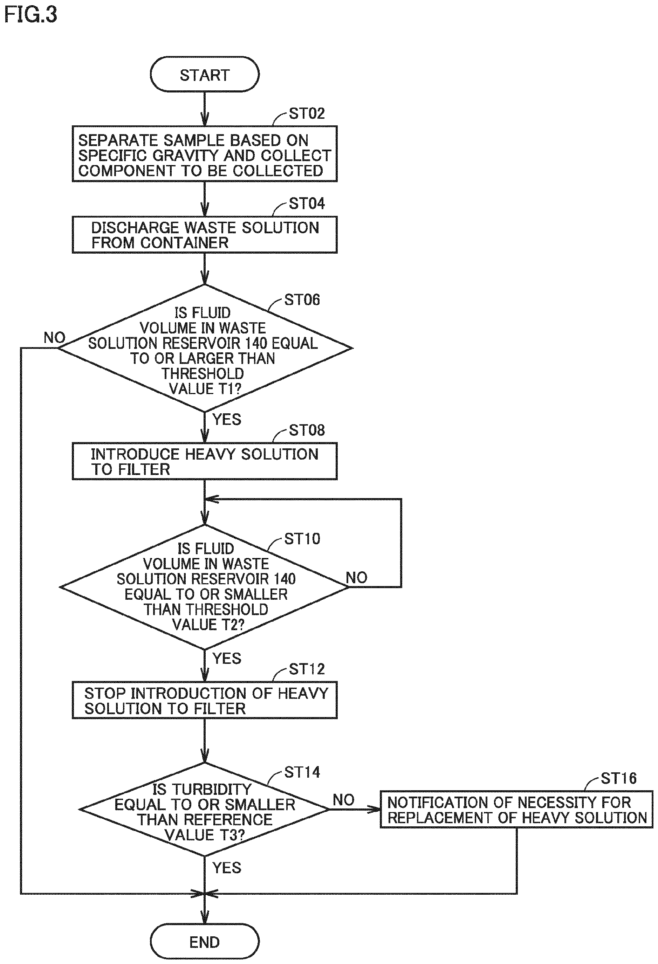

Fig. 3 is a flowchart showing processing relating to filtering of the heavy solution.

Referring to Fig. 3, in step (the step being abbreviated as ST below) 02, processor 51 of computer 500 has a sample separated based on a specific gravity with the use of the heavy solution supplied from heavy solution reservoir 120 in container 50 of purification apparatus 1, for collection of a component to be collected. In ST04, processor 51 has the waste solution from container 50 discharged and has the waste solution stored in waste solution reservoir 140.

In ST06, processor 51 determines whether or not the fluid volume in waste solution reservoir 140 is equal to or larger than a threshold value T1. When the fluid volume is smaller than threshold value T1 (NO in ST06), processor 51 determines that the fluid volume is not sufficient for filtering and quits the process. When the fluid volume is equal to or larger than threshold value T1 (YES in ST06), processor 51 determines that the fluid volume is sufficient for filtering and has the process proceed to ST08. In ST08, processor 51 has pump 30 driven to introduce the heavy solution to filters F1 and F2 in pipe 10 to remove the contaminant from the heavy solution. The heavy solution that has passed through filters F1 and F2 is sent back to heavy solution reservoir 120.

In ST10, processor 51 determines whether or not the fluid volume in waste solution reservoir 140 is equal to or smaller than a threshold value T2. Threshold value T2 is smaller than threshold value T1 (T1 > T2). When the fluid volume is larger than threshold value T2 (NO in ST10), processor 51 determines that filtering has not been completed, has the process return to ST10, and has filtering of the heavy solution by filters F1 and F2 continue. When the fluid volume is equal to or smaller than threshold value T2 (YES in ST10), processor 51 determines that filtering has been completed, and in ST12, processor 51 deactivates pump 30 to stop introduction of the heavy solution to filters F1 and F2.

In ST14, processor 51 determines whether or not the turbidity of the heavy solution stored in heavy solution reservoir 120 is equal to or smaller than a reference value T3. When the turbidity of the heavy solution is equal to or smaller than reference value T3 (YES in ST14), processor 51 determines that the heavy solution stored in heavy solution reservoir 120 maintains its quality that permits use thereof again for purification of the sample and quits the process. When the turbidity of the heavy solution is larger than reference value T3 (NO in ST14), processor 51 determines that the heavy solution stored in heavy solution reservoir 120 is not usable again for purification of the sample and has the process proceed to ST16. In ST16, processor 51 notifies the user of necessity for replacement of the heavy solution in heavy solution reservoir 120 on display 55 and quits the process.

As set forth above, according to purification apparatus 1 according to the first embodiment, the heavy solution in heavy solution reservoir 120 is used to purify the sample and thereafter the heavy solution discharged as the waste solution is filtered through filters F1 and F2, so that the heavy solution can be sent back to heavy solution reservoir 120. In other words, the heavy solution can be reused.

### (First Modification)

The fluid volume sensor for waste solution reservoir 140 in purification apparatus 1 according to the first embodiment may be configured to detect, for example, a total fluid volume in waste solution reservoirs 140 and 150.

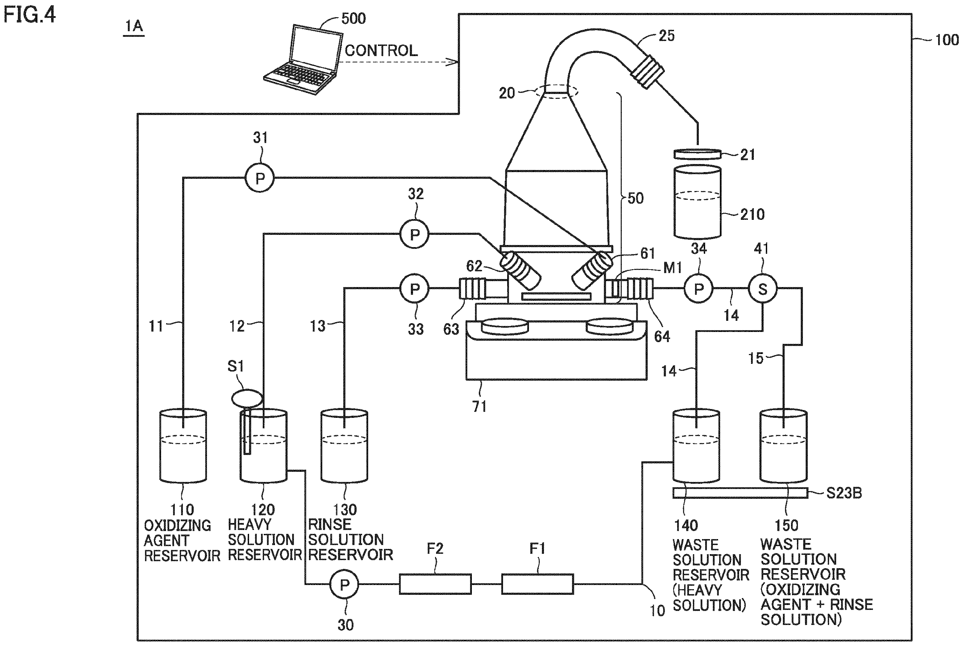

Fig. 4 is a schematic diagram showing a configuration of a purification apparatus 1A according to a first modification. Purification apparatus 1A includes a fluid volume sensor S23B instead of fluid volume sensors S23 and S3B in purification apparatus 1.

Fluid volume sensor S23B detects a total fluid volume of the waste solution contained in waste solution reservoirs 140 and 150. Fluid volume sensor S23B is, for example, a weight sensor that detects a total weight of waste solution reservoirs 140 and 150. The weight sensor is, for example, a load cell. A detection value from fluid volume sensor S23B is transmitted to computer 500.

A method of determination by computer 500 as to completion of filtering based on the detection value from fluid volume sensor S23B will now be described. Computer 500 stores a detection value from fluid volume sensor S23B immediately before discharge of the heavy solution from container 50 and a detection value from fluid volume sensor S23B immediately after completion of discharge of the heavy solution from container 50 during purification of the sample, and calculates the fluid volume corresponding to each of the detection values. Computer 500 then subtracts the fluid volume corresponding to the detection value immediately before discharge from the fluid volume corresponding to the detection value immediately after discharge to calculate the fluid volume of the waste solution stored in waste solution reservoir 140. Thereafter, when the fluid volume is equal to or larger than threshold value T1, computer 500 has pump 30 driven to perform filtering. When the fluid volume becomes equal to or smaller than threshold value T2, computer 500 then determines that filtering has been completed and deactivates pump 30 to stop filtering. Therefore, fluid volume sensor S23B corresponds to one example of the "second sensor" that detects completion of filtering of the heavy solution in pipe 10.

As set forth above, purification apparatus 1A according to the first modification can also detect completion of filtering of the heavy solution. In purification apparatus 1A as well, the heavy solution used for purification of the sample can be reused, as in purification apparatus 1 according to the first embodiment.

### [Second Embodiment]

In order to filter and reuse the heavy solution used for purification of the sample, basically, the heavy solution should appropriately be discharged from container 50 after purification of the sample.

When the contaminant or the like clogs discharge mesh M1 during discharge of the oxidizing agent and/or the rinse solution from container 50, some of the oxidizing agent and/or the rinse solution may remain in container 50. In this case, the oxidizing agent and/or the rinse solution that remain(s) in container 50 may be mixed in the heavy solution introduced from heavy solution reservoir 120.

When the contaminant or the like clogs discharge mesh M1 during discharge of the heavy solution from container 50, some of the heavy solution may remain in container 50 and the heavy solution may not be reused.

In this case, the concentration of the heavy solution discharged from container 50 may become lower than the concentration at a time point when the heavy solution was stored in heavy solution reservoir 120, and the heavy solution may not appropriately maintain its quality for reuse. When the oxidizing agent and the heavy solution are mixed with each other, a chemical reaction may occur between the oxidizing agent and the heavy solution. In this case, a chemical property of the heavy solution may vary and the heavy solution may not be reused.

In a purification apparatus according to a second embodiment, a method of detecting clogging of discharge mesh M1 and mitigating clogging is performed at the time of discharge of the waste solution from container 50. Therefore, in the purification apparatus, possibility that some of the waste solution remains in container 50 due to clogging of discharge mesh M1 and the heavy solution is non-reusable is lowered.

The purification apparatus according to the second embodiment is the same in configuration as purification apparatus 1 according to the first embodiment shown in Fig. 1.

In the second embodiment, fluid volume sensor S23 is used also for detection of discharge of the waste solution (heavy solution) from container 50 to pipe 14. In other words, in the second embodiment, fluid volume sensor S23 corresponds to one example of the "second sensor," and at the same time, corresponds also to one example of the "third sensor."

Fluid volume sensor S3B is used for detection of discharge of the waste solution (the oxidizing agent or the rinse solution) from container 50 to pipe 14. In other words, fluid volume sensor S3B corresponds to one example of the "third sensor."

Specifically, computer 500 calculates, based on specifications of pump 34 used for discharge of the waste solution from container 50, a rate of change Wp which represents an amount of change of the fluid volume in waste solution reservoir 140 or 150 per unit time while the waste solution is normally discharged with discharge mesh M1 being provided. On the other hand, computer 500 calculates a rate of change Wm which represents an amount of change of the fluid volume in waste solution reservoir 140 or 150 per unit time based on detection values from fluid volume sensors S23 and S3B received every prescribed time period (for example, one second). Rate of change Wp and rate of change Wm are each a positive real number, and a unit thereof is, for example, g/second.

When discharge mesh M1 is clogged and discharge of the waste solution becomes abnormal, a numerical value of rate of change Wm becomes significantly smaller than rate of change Wp.

In view of such circumstances, when the value of rate of change Wm becomes equal to or smaller than a prescribed ratio R to rate of change Wp (Wm ≤ Wp × R), computer 500 determines that there is possibility of occurrence of an abnormality in discharge of the waste solution, that is, possibility of clogging of discharge mesh M1. R is a real number larger than 0 and smaller than 1, and set to an appropriate value, for example, by the user.

When computer 500 determines that there is possibility of clogging of discharge mesh M1, it has the stirring portion perform stirring in container 50. The contaminant or the like which was a cause of clogging may be separated from discharge mesh M1 toward container 50 by a flow of water produced by stirring and clogging may be mitigated. Stirring is performed for a prescribed time period at a prescribed rotation speed. The rotation speed of stirring is preferably higher than a rotation speed of stirring performed in ordinary purification. When a condition of Wm > Wp × R is satisfied after the stirring, it is determined that clogging of discharge mesh M1 has been mitigated.

Desirably, pump 34 is deactivated during stirring to thereby stop discharge of the waste solution from container 50. According to such a configuration, force of suction of the contaminant or the like which is the cause of clogging of discharge mesh M1 toward discharge mesh M1 is weakened, and the contaminant or the like is more readily separated toward container 50. After the stirring, pump 34 is activated again and determination as to clogging of discharge mesh M1 is made.

In view of a condition of Wm ≤ Wp × R being satisfied also after stirring performed once, a prescribed number of times of stirring may be performed until a condition of Wm > Wp × R is satisfied.

Clogging of discharge mesh M1, however, may not be mitigated by stirring. In view of this case, when an amount of discharge detected by fluid volume sensor S23 or S3B is smaller than a threshold value also after the prescribed number of times of stirring, computer 500 gives a notification of an error. The error includes contents that encourage the user to mitigate clogging of discharge mesh M1 with a "method different from stirring." The notification of the error is given, for example, by visual representation with the use of display 55 or a not-shown indicator or by voice and sound through a not-shown speaker or the like.

An exemplary "method different from stirring" is opening of container 50 by the user and elimination of clogging of discharge mesh M1 with such an apparatus as a brush from the inside of container 50. Another exemplary "method different from stirring" is a backflow of the waste solution from pipe 14 to discharge mesh M1. This method is performed, for example, by an apparatus included in purification instrument 100.

In calculation of the amount of discharge of the waste solution from container 50 based on the fluid volumes in waste solution reservoirs 140 and 150 detected by fluid volume sensors S23 and S3B, respectively, the fluid volume in each of waste solution reservoirs 140 and 150 is desirably not varied by a factor other than discharge of the waste solution from container 50. Specifically, in the second embodiment, preferably, pump 30 is controlled to be inactive during discharge of the waste solution from container 50 so as not to introduce the waste solution in waste solution reservoir 140 into pipe 10. Preferably, pump 30 is driven to introduce the waste solution in waste solution reservoir 140 into pipe 10 after confirmation of completion of discharge of the waste solution from container 50.

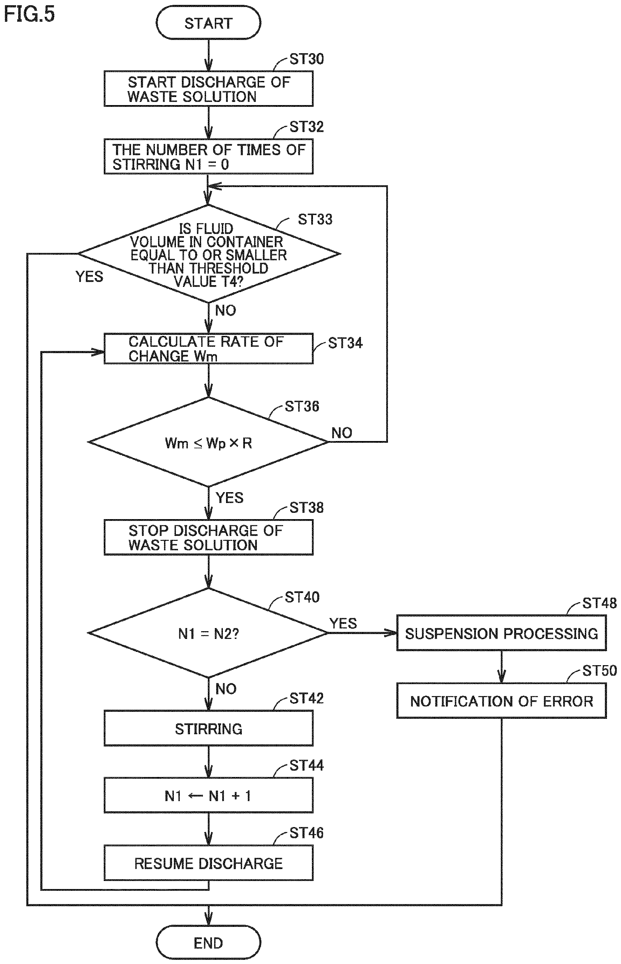

Fig. 5 is a flowchart showing processing relating to detection and mitigation of clogging of discharge mesh M1 of the purification apparatus according to the second embodiment.

Referring to Fig. 5, in ST30, processor 51 has pump 34 driven to start discharge of the waste solution from container 50 through discharge mesh M1 to pipe 14. In ST32, processor 51 initializes the number of times of stirring N1 to 0.

In ST33, processor 51 determines whether or not discharge of the waste solution from container 50 has been completed. Specifically, when the fluid volume of the waste solution in container 50 is equal to or smaller than a threshold value T4, for example, based on a detection value from a not-shown fluid volume sensor in container 50, it is determined that discharge of the waste solution from container 50 has been completed. In this case, processor 51 deactivates pump 34 to stop discharge of the waste solution from container 50 and quits the process.

In ST34, processor 51 detects with fluid volume sensors S23 and S3B, the amount of discharge of the waste solution from container 50 to pipe 14. Specifically, processor 51 calculates rate of change Wm based on the detection values from fluid volume sensors S23 and S3B. In ST36, processor 51 determines whether or not the amount of discharge of the waste solution is smaller than a threshold value. Specifically, processor 51 determines whether or not the condition of Wm ≤ Wp × R is satisfied. When the condition of Wm > Wp × R is satisfied (NO in ST36), processor 51 has the process return to ST33 while it allows discharge of the waste solution to continue.

When the condition of Wm ≤ Wp × R is satisfied (YES in ST36), in ST38, processor 51 deactivates pump 34 to stop discharge of the waste solution from container 50. In ST40, processor 51 determines whether or not the number of times of stirring N1 is equal to a prescribed number of times N2. N2 is a positive integer not smaller than one.

When the number of times of stirring N1 is smaller than the prescribed number of times N2 (NO in ST40), in ST42, processor 51 has stirring in container 50 performed for a prescribed time period at a prescribed rotation speed. In ST44, processor 51 increments a value of the number of times of stirring N1 by one. In ST46, processor 51 has pump 34 driven to resume discharge of the waste solution and has the process return to ST34.

When the number of times of stirring N1 is equal to the prescribed number of times N2 (YES in ST40), in ST48, processor 51 suspends purification treatment in purification apparatus 1. In ST50, processor 51 gives a notification of an error and quits the process. The error includes contents that encourage the user to mitigate clogging of discharge mesh M1 with a "method different from stirring."

The sample assumed as an object to be purified by purification apparatus 1 includes also an environmental sample such as mud on the sea bottom. In this case, the sample is often unique. Specifically, when purification apparatus 1 stops operating due to clogging of discharge mesh M1 and when a solution containing the sample in container 50 is totally discarded for elimination of clogging, it is difficult to obtain the same sample again. Therefore, even though an additional process, that is, stirring and elimination of clogging of discharge mesh M1 with the "method different from stirring," are performed, an advantage of completion of purification without loss of the sample is greater.

In view of such circumstances, the number of times of stirring N1 may be initialized to 0 when discharge of the waste solution following stirring satisfies the condition of Wm > Wp × R for a prescribed time period. According to such a configuration, even when discharge mesh M1 is once clogged, so long as the clogging is mitigated by stirring, after lapse of a prescribed time period, stirring can be performed on the occurrence of clogging of discharge mesh M1.

In the second embodiment, a sensor that detects the amount of discharge of the waste solution from container 50 to pipe 14 should only be provided. Therefore, for example, fluid volume sensor S23B described in the first modification of the first embodiment may be used instead of fluid volume sensors S23 and S3B. In other words, fluid volume sensor S23 corresponds to one example of the "third sensor."

As set forth above, according to the purification apparatus according to the second embodiment, the heavy solution can be reused by filtering thereof as in purification apparatus 1 according to the first embodiment, and additionally, on the occurrence of clogging of discharge mesh M1 during discharge of the waste solution (the heavy solution, the oxidizing agent, or the rinse solution) from container 50, clogging can also be mitigated.

On the occurrence of clogging of discharge mesh M1 during discharge of another waste solution (for example, sea water or the like contained in the sample) as well, the purification apparatus can similarly detect clogging and mitigate clogging by stirring.

Therefore, possibility that, in container 50, the waste solution other than the remaining heavy solution is mixed into the heavy solution introduced from heavy solution reservoir 120 and the heavy solution becomes non-reusable is lowered. Possibility that the heavy solution remains in container 50 is also lowered. Therefore, with the purification apparatus, reuse of the heavy solution is further facilitated.

### (Second Modification)

A second modification illustrates an example in which a flow rate sensor provided in pipe 14 is used as the sensor capable of detecting the amount of discharge of the waste solution from container 50 to pipe 14.

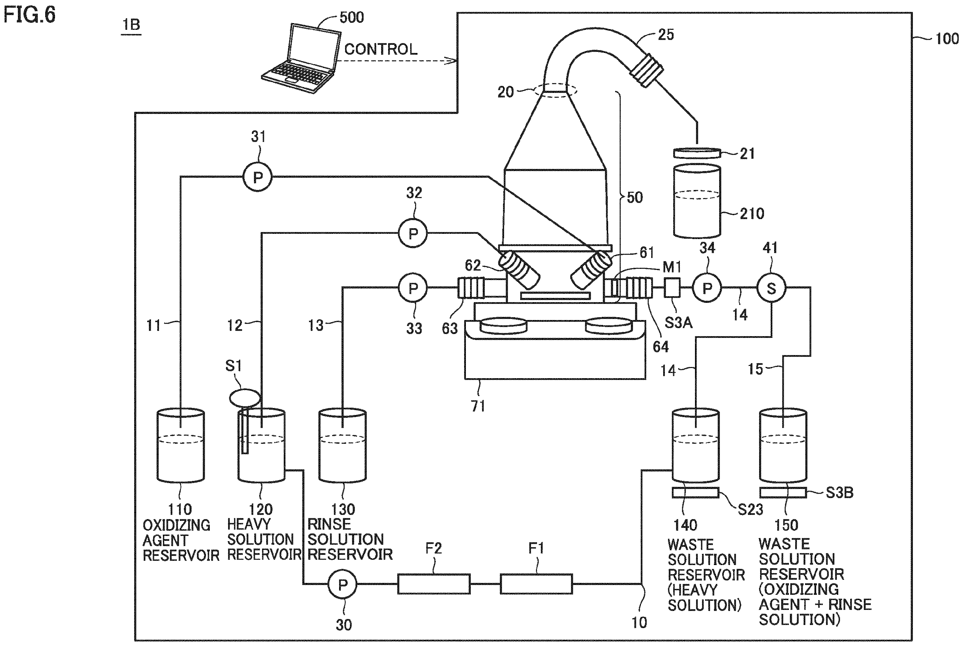

Fig. 6 is a schematic diagram showing a configuration of a purification apparatus 1B according to the second modification. Purification apparatus 1B includes a flow rate sensor S3A provided in pipe 14 in addition to the configuration of purification apparatus 1. Flow rate sensor S3A detects the flow rate of the waste solution in pipe 14. Flow rate sensor S3A corresponds to one example of the "third sensor." A detection value from flow rate sensor S3A is sent to computer 500.

When the detection value from flow rate sensor S3A is equal to or smaller than a prescribed threshold value, computer 500 determines that discharge of the waste solution from container 50 is abnormal, that is, there is possibility of clogging of discharge mesh M1. When clogging of discharge mesh M1 is detected, clogging of discharge mesh M1 can be mitigated by stirring in container 50 as in the second embodiment.

As set forth above, in purification apparatus 1B according to the second modification as well, not only completion of filtering of the heavy solution is detected, but also clogging of discharge mesh M1 can be mitigated when clogging occurs during discharge of the waste solution from container 50.

### [Third Embodiment]

The method of eliminating clogging of discharge mesh M1 included in the purification apparatus according to each of the second embodiment and the second modification can be performed independently of a reuse method by filtering of the heavy solution included in common in purification apparatuses 1 and 1B according to the first embodiment and the first modification.

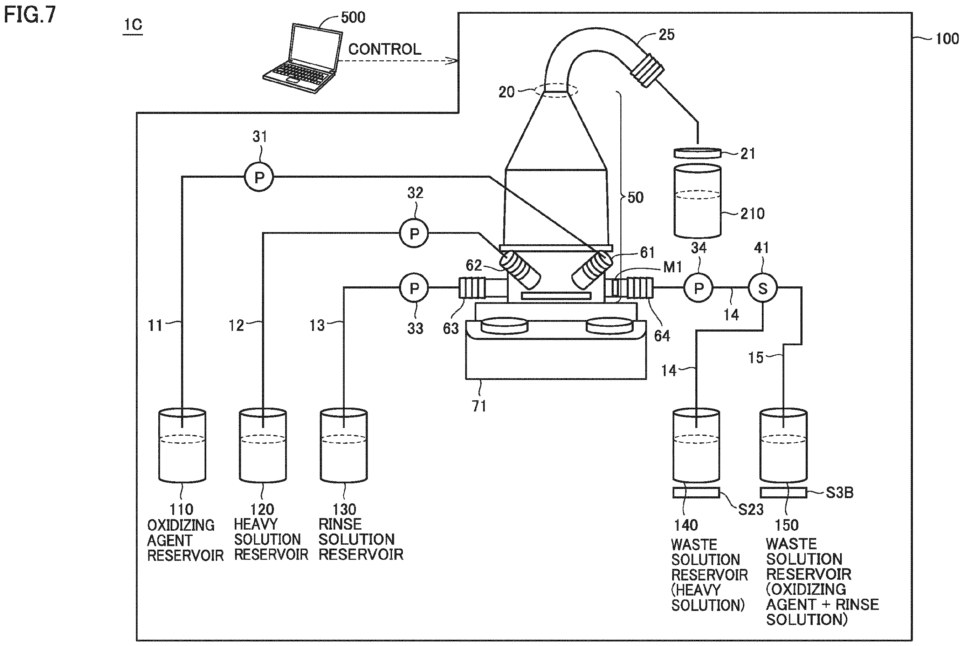

Fig. 7 is a schematic diagram showing a configuration of a purification apparatus 1C according to a third embodiment. Purification apparatus 1C is obtained by removal from purification apparatus 1, of pipe 10, pump 30, filters F1 and F2, and heavy solution sensor S1 which are used for filtering of the heavy solution. Such purification apparatus 1C can also eliminate clogging of discharge mesh M1.

Purification apparatus 1C can appropriately discharge the waste solution (the heavy solution, the oxidizing agent, or the rinse solution) from container 50 to pipe 14 by eliminating clogging of discharge mesh M1. In other words, since possibility that the heavy solution remains in container 50 or the heavy solution is mixed in container 50, into the remaining oxidizing agent or rinse solution is lowered, possibility of appropriate discharge of the heavy solution to waste solution reservoir 140 increases. Therefore, filtering of the heavy solution stored in waste solution reservoir 140 for reuse for purification of the sample is further facilitated.

### [Aspects]

Illustrative embodiments described above are understood by a person skilled in the art as specific examples of aspects below.

(Clause 1) A purification apparatus according to one aspect is a purification apparatus that purifies a sample. The purification apparatus may include a heavy solution reservoir, a container, a first pipe, a second pipe, and a filter unit. A heavy solution is stored in the heavy solution reservoir. The sample is separated in container 50 with a heavy solution supplied from the heavy solution reservoir, based on a specific gravity difference. A waste solution from the container is discharged through the first pipe. The heavy solution from the first pipe is sent to the heavy solution reservoir through the second pipe. The filter unit is provided in the second pipe to remove a contaminant from the heavy solution discharged through the first pipe.

According to the purification apparatus according to Clause 1, the heavy solution from which a component to be separated has been removed in the container is discharged through the first pipe, a contaminant is removed therefrom by the filter unit provided in the second pipe, and thereafter the resultant heavy solution is stored in the heavy solution reservoir. Therefore, the heavy solution for gravity separation can efficiently be used.

(Clause 2) The purification apparatus according to Clause 1 may further include a first sensor that detects at least one of a turbidity and a concentration of the heavy solution that has passed through the filter unit.

According to the purification apparatus according to Clause 2, a computer can determine whether or not the heavy solution that has passed through the filter unit maintains its quality that permits use thereof again for purification of the sample, based on a detection value from the first sensor.

(Clause 3) In the purification apparatus according to Clause 1 or 2, the filter unit may include a first filter and a second filter, the second filter being provided between the first filter and the heavy solution reservoir, and the second filter may be smaller in pore diameter than the first filter.

The purification apparatus according to Clause 3 is more advantageous than an example where the first filter large in pore diameter is used alone in that a relatively smaller contaminant is also removed. Furthermore, the purification apparatus is more advantageous than an example where the second filter small in pore diameter is used alone in that clogging by the contaminant is less likely and a frequency of replacement of the filter can be lowered.

(Clause 4) The purification apparatus according to any one of Clauses 1 to 3 may further include a pump provided in the second pipe, the pump being configured to introduce the heavy solution into the heavy solution reservoir.

According to the purification apparatus according to Clause 4, the pump can be used to introduce the heavy solution from the waste solution reservoir into the heavy solution reservoir.

(Clause 5) The purification apparatus according to any one of Clauses 1 to 4 may further include a waste solution reservoir provided between the first pipe and the second pipe and configured to store the heavy solution discharged through the first pipe.

According to the purification apparatus according to Clause 5, the heavy solution discharged from the container can temporarily be stored in the waste solution reservoir before it is introduced into the second pipe through which the heavy solution is filtered. After discharge of the heavy solution is completed in the container, filtering of the heavy solution discharged from the container can be started.

(Clause 6) The purification apparatus according to any one of Clauses 1 to 5 may further include a second sensor that detects completion of filtering of the heavy solution in the second pipe.

According to the purification apparatus according to Clause 6, completion of filtering can be detected and the pump can be deactivated to stop filtering.

(Clause 7) The purification apparatus according to Clause 1 may further include a waste solution reservoir configured to store the heavy solution discharged through the first pipe and a mesh member provided between the container and the first pipe.

According to the purification apparatus according to Clause 7, the heavy solution discharged from the container can temporarily be stored in the waste solution reservoir before it is introduced into the second pipe through which the heavy solution is filtered. After discharge of the heavy solution in the container is completed, filtering of the heavy solution discharged from the container can be started. In addition, according to the purification apparatus, the mesh member does not permit discharge of a component contained in the sample from the container to the first pipe.

(Clause 8) The purification apparatus according to Clause 7 may further include a third sensor that detects discharge of the waste solution from the container to the first pipe, a stirring portion that stirs the sample in the container, and a computer. The computer may be configured to compare an amount of discharge of the waste solution detected by the third sensor with a threshold value, and cause the stirring portion to perform stirring in the container when the computer determines that the amount of discharge is smaller than the threshold value.

According to the purification apparatus according to Clause 8, when the amount of discharge of the waste solution is smaller than the threshold value, that is, there is possibility of clogging of the mesh member, the computer can have an object in the container stirred to separate a contaminant or the like which is the cause of clogging of the mesh member from the mesh member to mitigate clogging.

(Clause 9) In the purification apparatus according to Clause 8, the third sensor may include at least one of a fluid volume sensor and a flow rate sensor.

According to the purification apparatus according to Clause 9, the amount of discharge of the waste solution being smaller than the threshold value can be detected based on a detection value from at least one of the fluid volume sensor and the flow rate sensor.

(Clause 10) In the purification apparatus according to Clause 8 or 9, when the amount of discharge detected by the third sensor is still smaller than the threshold value even after stirring by the stirring portion, the computer may be configured to cause the stirring portion to perform stirring again.

According to the purification apparatus according to Clause 10, stirring can be repeated until clogging of the mesh member is eliminated.

(Clause 11) In the purification apparatus according to any one of Clauses 8 to 10, when the amount of discharge detected by the third sensor is smaller than the threshold value even after a prescribed number of times of stirring by the stirring portion, the computer may be configured to give a notification of an error.

According to the purification apparatus according to Clause 11, when clogging of the mesh member is not eliminated by stirring, the user is given a notification of an error so that the user can be encouraged to mitigate clogging of the mesh member with a "method different from stirring."

(Clause 12) In the purification apparatus according to any one of Clauses 8 to 11, an oxidizing agent for treatment of some of a contaminant contained in the sample or a rinse solution for cleaning of inside of the container may be supplied into the container of the purification apparatus, and the waste solution discharged from the container to the first pipe may contain the heavy solution, the oxidizing agent, or the rinse solution.

According to the purification apparatus according to Clause 12, clogging can be mitigated by stirring or a method different from stirring also when the mesh member is clogged during discharge of the heavy solution, the oxidizing agent, or the rinse solution from the container.

(Clause 13) A purification apparatus according to one aspect may include a container, a first pipe, a mesh member, a sensor, a stirring portion, and a computer. A sample is separated in the container with a heavy solution based on a specific gravity difference. A waste solution from the container is discharged through the first pipe. The mesh member is provided between the container and the first pipe. The sensor detects discharge of the waste solution from the container to the first pipe. The stirring portion stirs the sample in the container. The computer is configured to compare an amount of discharge of the waste solution detected by the sensor with a threshold value, and cause the stirring portion to perform stirring in the container when the computer determines that the amount of discharge is smaller than the threshold value.

According to the purification apparatus according to Clause 13, when the amount of discharge of the waste solution is smaller than the threshold value, that is, there is possibility of clogging of the mesh member, the computer can have an object in the container stirred to separate a contaminant or the like which is the cause of clogging of the mesh member from the mesh member to mitigate clogging.

(Clause 14) A control method according to one aspect is a control method performed by a computer included in a purification apparatus that purifies a sample in a container supplied with a heavy solution in a heavy solution reservoir. The control method may include discharging a waste solution from the container, introducing the heavy solution discharged from the container to a filter unit to remove a contaminant from the heavy solution, and sending the heavy solution that has passed through the filter unit back to the heavy solution reservoir.

According to the control method according to Clause 14, the heavy solution from which a component to be separated has been removed in the container is discharged as the waste solution, a contaminant is removed therefrom by the filter unit, and thereafter the resultant heavy solution is stored in the heavy solution reservoir. Therefore, the heavy solution for gravity separation can efficiently be used.

(Clause 15) The purification apparatus according to Clause 14 may further include a first pipe through which the waste solution from the container is discharged, a mesh member provided between the container and the first pipe, a sensor that detects discharge of the waste solution from the container to the first pipe, and a stirring portion that stirs the sample in the container. The discharging a waste solution from the container may include discharging the waste solution from the container to the first pipe through the mesh member. The control method may further include detecting, by the sensor, an amount of discharge of the waste solution from the container to the first pipe and comparing the amount of discharge of the waste solution detected by the sensor with a threshold value, and when the amount of discharge is determined as being smaller than the threshold value, performing stirring in the container.

According to the control method according to Clause 15, when the amount of discharge of the waste solution is smaller than the threshold value, that is, there is possibility of clogging of the mesh member, the computer can have an object in the container stirred to separate a contaminant or the like which is the cause of clogging of the mesh member from the mesh member to mitigate clogging.

(Clause 16) A control method according to one aspect is a control method performed by a computer in a purification apparatus, the purification apparatus including a container for separating, with a heavy solution, a sample based on a specific gravity difference, a first pipe through which a waste solution from the container is discharged, a mesh member provided between the container and the first pipe, a sensor that detects discharge of the waste solution from the container to the first pipe, a stirring portion that stirs the sample in the container, and the computer. The control method may include discharging the waste solution from the container to the first pipe through the mesh member after purification of the sample, detecting, by the sensor, an amount of discharge of the waste solution from the container to the first pipe, and comparing the amount of discharge of the waste solution detected by the sensor with a threshold value, and when the amount of discharge is determined as being smaller than the threshold value, performing stirring in the container.

According to the control method according to Clause 16, when the amount of discharge of the waste solution is smaller than the threshold value, that is, there is possibility of clogging of the mesh member, the computer can have an object in the container stirred to separate a contaminant or the like which is the cause of clogging of the mesh member from the mesh member to mitigate clogging.

It should be understood that the embodiments disclosed herein are illustrative and non-restrictive in every respect. The scope of the present invention is defined by the terms of the claims rather than the description above and is intended to include any modifications within the scope and meaning equivalent to the terms of the claims.

### REFERENCE SIGNS LIST

1, 1A to 1C purification apparatus; 10 to 15 pipe; 20 discharge port; 21 detection mesh; 25 discharge pipe; 30 to 34 pump; 41 switching valve; 50 container; 51 processor; 52 memory; 55 display; 56 operation portion; 61 to 64 port; 71 constant-temperature stirrer; 100 purification instrument; 110 oxidizing agent reservoir; 120 heavy solution reservoir; 130 rinse solution reservoir; 140, 150 waste solution reservoir; 210 supernatant reservoir; 500 computer; 5000 controller; F1, F2 filter; 53 communication I/F; 54 input and output I/F; M1 discharge mesh; S1 heavy solution sensor; S3A flow rate sensor; S3B, S23, S23B fluid volume sensor

## Claims

1. A purification apparatus that purifies a sample, the purification apparatus comprising:
a heavy solution reservoir where a heavy solution is stored;
a container for separating, with a heavy solution supplied from the heavy solution reservoir, the sample based on a specific gravity difference;
a first pipe through which a waste solution from the container is discharged;
a second pipe through which the heavy solution from the first pipe is sent to the heavy solution reservoir; and
a filter unit provided in the second pipe to remove a contaminant from the heavy solution discharged through the first pipe.

2. The purification apparatus according to claim 1, further comprising a first sensor that detects at least one of a turbidity and a concentration of the heavy solution that has passed through the filter unit.

3. The purification apparatus according to claim 1, wherein
the filter unit includes a first filter and a second filter, the second filter being provided between the first filter and the heavy solution reservoir, and
the second filter is smaller in pore diameter than the first filter.

4. The purification apparatus according to claim 1, further comprising a pump provided in the second pipe, the pump being configured to introduce the heavy solution into the heavy solution reservoir.

5. The purification apparatus according to claim 1, further comprising a waste solution reservoir provided between the first pipe and the second pipe and configured to store the heavy solution discharged through the first pipe.

6. The purification apparatus according to claim 1, further comprising a second sensor that detects completion of filtering of the heavy solution in the second pipe.

7. The purification apparatus according to claim 1, further comprising:
a waste solution reservoir configured to store the heavy solution discharged through the first pipe; and
a mesh member provided between the container and the first pipe.

8. The purification apparatus according to claim 7, further comprising:
a third sensor that detects discharge of the waste solution from the container to the first pipe;
a stirring portion that stirs the sample in the container; and
a computer, wherein
the computer is configured to
compare an amount of discharge of the waste solution detected by the third sensor with a threshold value, and
cause the stirring portion to perform stirring in the container when the computer determines that the amount of discharge is smaller than the threshold value.

9. The purification apparatus according to claim 8, wherein
the third sensor includes at least one of a fluid volume sensor and a flow rate sensor.

10. The purification apparatus according to claim 8, wherein
when the amount of discharge detected by the third sensor is still smaller than the threshold value even after stirring by the stirring portion, the computer is configured to cause the stirring portion to perform stirring again.

11. The purification apparatus according to claim 8, wherein
when the amount of discharge detected by the third sensor is smaller than the threshold value even after a prescribed number of times of stirring by the stirring portion, the computer is configured to give a notification of an error.

12. The purification apparatus according to claim 8, wherein
an oxidizing agent for treatment of some of a contaminant contained in the sample or a rinse solution for cleaning of inside of the container may be supplied into the container of the purification apparatus, and
the waste solution discharged from the container to the first pipe contains the heavy solution, the oxidizing agent, or the rinse solution.

13. A purification apparatus comprising:
a container for separating, with a heavy solution, a sample based on a specific gravity difference;
a first pipe through which a waste solution from the container is discharged;
a mesh member provided between the container and the first pipe;
a sensor that detects discharge of the waste solution from the container to the first pipe;
a stirring portion that stirs the sample in the container; and
a computer, wherein
the computer is configured to
compare an amount of discharge of the waste solution detected by the sensor with a threshold value, and
cause the stirring portion to perform stirring in the container when the computer determines that the amount of discharge is smaller than the threshold value.

14. A control method performed by a computer included in a purification apparatus, the purification apparatus purifying a sample in a container supplied with a heavy solution in a heavy solution reservoir, the control method comprising:
discharging a waste solution from the container;
introducing the heavy solution discharged from the container to a filter unit to remove a contaminant from the heavy solution; and
sending the heavy solution that has passed through the filter unit back to the heavy solution reservoir.

15. The control method according to claim 14, wherein
the purification apparatus further includes
a first pipe through which a waste solution from the container is discharged,
a mesh member provided between the container and the first pipe,
a sensor that detects discharge of the waste solution from the container to the first pipe, and
a stirring portion that stirs the sample in the container, wherein
the discharging a waste solution from the container includes discharging the waste solution from the container to the first pipe through the mesh member, and
the control method further comprises:
detecting, by the sensor, an amount of discharge of the waste solution from the container to the first pipe; and
comparing the amount of discharge of the waste solution detected by the sensor with a threshold value, and when the amount of discharge is determined as being smaller than the threshold value, performing stirring in the container.

16. A control method performed by a computer in a purification apparatus, the purification apparatus including a container for separating, with a heavy solution, a sample based on a specific gravity difference, a first pipe through which a waste solution from the container is discharged, a mesh member provided between the container and the first pipe, a sensor that detects discharge of the waste solution from the container to the first pipe, a stirring portion that stirs the sample in the container, and the computer, the control method comprising:
after purification of the sample, discharging the waste solution from the container to the first pipe through the mesh member;
detecting, by the sensor, an amount of discharge of the waste solution from the container to the first pipe; and
comparing the amount of discharge of the waste solution detected by the sensor with a threshold value, and when the amount of discharge is determined as being smaller than the threshold value, performing stirring in the container.
